# EUROPÄISCHE PATENTANMELDUNG

(11) **EP 3 404 224 A1**
(43) Veröffentlichungstag der Anmeldung: **21.11.2018**
(21) Anmeldenummer: 17171904.0
(22) Anmeldetag: 19.05.2017
(51) Int. Cl.: F01M 1/08, F01M 9/02, F16N 39/00, F01M 5/02, F01M 11/02

(54) **SCHMIERVORRICHTUNG FÜR EINEN GROSSDIESELMOTOR, VERFAHREN ZUR ZYLINDERSCHMIERUNG EINES GROSSDIESELMOTORS, SOWIE GROSSDIESELMOTOR**

(71) Anmelder: Winterthur Gas & Diesel AG, 8401 Winterthur (CH)
(72) Erfinder: Peitz, Daniel, 5400 Baden (CH); Räss, Konrad, 8457 Humlikon (CH)
(74) Vertreter: Intellectual Property Services GmbH

(57) **Zusammenfassung**

Es wird eine Schmiervorrichtung für einen Grossdieselmotor vorgeschlagen, der mindestens einen Zylinder (2) aufweist, in welchem ein Kolben (3) entlang einer Lauffläche (21) hin- und herbewegbar angeordnet ist, mit einem ersten Vorratsbehälter (41) für ein erstes Schmiermittel zur Schmierung des Zylinders (2), mit einem zweiten Vorratsbehälter (42) für ein zweites Schmiermittel zur Schmierung des Zylinders (2), mit einer Schmiermittelzuführung (9) zum Einbringen des ersten oder des zweiten Schmiermittels in den Zylinder (2), mit einer Schmiermittelpumpe (8), mit welcher das erste oder das zweite Schmiermittel in die Schmiermittelzuführung (9) förderbar ist, sowie mit einem Umschaltorgan (7), mit welchem der Schmiermittelpumpe (8) wahlweise das erste oder das zweite Schmiermittel zuführbar ist, wobei zwischen dem Umschaltorgan (7) und den Vorratsbehältern (41, 42) ein erster Zwischenspeicher (51) und ein zweiter Zwischenspeicher (52) vorgesehen ist, wobei der erste Zwischenspeicher (51) über eine erste Versorgungsleitung (61) mit dem ersten Vorratsbehälter (41) verbunden ist, sowie über eine erste Zuführleitung (71) mit dem Umschaltorgan (7), und wobei der zweite Zwischenspeicher (52) über eine zweite Versorgungsleitung (62) mit dem zweiten Vorratsbehälter (42) verbunden ist, sowie über eine zweite Zuführleitung (72) mit dem Umschaltorgan (7). Ferner wird ein Verfahren zur Zylinderschmierung eines Grossdieselmotors sowie ein Grossdieselmotor vorgeschlagen.

## Beschreibung

### Schmiervorrichtung für einen Grossdieselmotor, Verfahren zur Zylinderschmierung eines Grossdieselmotors, sowie Grossdieselmotor

Die Erfindung betrifft ein Schmiervorrichtung für einen Grossdieselmotor, ein Verfahren zur Zylinderschmierung eines Grossdieselmotors, sowie einen Grossdieselmotor gemäss dem Oberbegriff des unabhängigen Patentanspruchs der jeweiligen Kategorie.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wichtiger Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgaswerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird.

Die Aspekte des wirtschaftlichen Betriebs und der Einhaltung von Abgasgrenzwerten hat dazu geführt, dass man nach Alternativen bezüglich der verwendeten Brennstoffe in einem Grossdieselmotor sucht. Dabei ist es bekannt, Grossdieselmotoren mit zwei unterschiedlichen Brennstoffen zu betreiben, wobei der Motor je nach Betriebssituation oder Umgebung entweder mit dem einen Brennstoff oder mit dem anderen Brennstoff oder mit Mischungen der beiden Brennstoffe betrieben wird.

Eine bekannte Ausgestaltung eines Grossdieselmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein Gas, z.B. ein Erdgases wie LNG (liquefied natural gas), oder ein anderes zum Antrieb einer Brennkraftmaschine geeignetes Gas oder Gasgemisch verbrannt wird, und andererseits in einem Flüssigmodus, in welchem ein geeigneter flüssiger Brennstoff wie Methanol, Benzin, Diesel, Schweröl oder andere geeignete flüssige Brennstoffe in demselben Motor verbrannt werden können. Die Grossdieselmotoren können dabei sowohl Zweitakt- als auch Viertaktmotoren sein, insbesondere auch längsgespülte Zweitakt-Grossdieselmotoren.

Mit dem Begriff "Grossdieselmotor" sind auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch diese genannten Dual-Fuel-Motoren und solche Grossmotoren, bei denen die Selbstzündung des Brennstoffs zur Fremdzündung eines anderen Brennstoffs genutzt wird.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Ein solcher Dual-Fuel Motor kann während des Betriebs vom Gasmodus in den Flüssigmodus umgeschaltet werden und umgekehrt.

Es sind auch solche Grossdieselmotoren bekannt, die mit zwei unterschiedlichen flüssigen Brennstoffen betrieben werden können, wobei dabei üblicherweise beide Brennstoffe vorrätig sind, sodass der Motor auch während des Betriebs entweder mit dem ersten oder mit dem zweiten Brennstoff betreibbar ist. Um einen möglichst effizienten und wirtschaftlichen Betrieb des Grossdieselmotors zu ermöglichen, sind einige verschiedene flüssige Brennstoffe bekannt, bzw. entwickelt worden. Neben den klassischen flüssigen Brennstoffen für Grossdieselmotoren, wie beispielsweise Dieselöl, Methanol, Schweröl oder auch andere schwere Kohlenwasserstoffe, die insbesondere als Rückstände bei der Raffinerie übrig bleiben, werden auch Emulsionen oder Suspensionen als Brennstoffe für Grossdieselmotoren verwendet.

Als ein Beispiel seien hier die als MSAR (Multiphase Superfine Atomised Residue) bezeichneten Emulsionen genannt. Dies sind im Wesentlichen Emulsionen aus einem schweren Kohlenwasserstoff, z. B. Bitumen, Schweröl oder ähnliches, und Wasser, die in speziellen Verfahren hergestellt werden. Ein weiteres Beispiel sind Suspensionen, z. B. aus Kohlenstaub und Wasser, die ebenfalls als Brennstoff für Grossdieselmotoren eingesetzt werden.

Die Verwendung solch unterschiedlicher Brennstoffe in ein und demselben Grossdieselmotor bringt jedoch Probleme mit sich, weil diese Brennstoffe sich in ihren chemischen und physikalischen Eigenschaften stark unterscheiden. Zwar ist es in modernen, elektronisch gesteuerten Grossdieselmotoren möglich, einige Parameter, wie beispielsweise Einspritzbeginn, Einspritzdauer oder Ansteuerung der Gaswechselsystem, während des Betriebs zu verändern und damit an den jeweiligen Brennstoff anzupassen, aber bei anderen Komponenten ist dies nicht oder kaum möglich, sodass hier Kompromisse eingegangen werden müssen. Beispielsweise kann das tribologische System Kolben/Kolbenringe/Zylinderlauffläche nur sehr begrenzt, nämlich durch Änderung der Schmierung, angepasst werden.

Der Zylinderschmierung kommt bei Grossdieselmotoren eine wesentliche Bedeutung zu. Im Betriebszustand gleitet der Kolben mit den Kolbenringen an der als Lauffläche dienenden inneren Wandung des Zylinders, die meist in Form einer Zylinderlaufbuchse (Liner) ausgestaltet ist, entlang. Einerseits muss der Kolben möglichst leicht, das heisst unbehindert, in dem Zylinder gleiten, andererseits muss der Kolben den Brennraum im Zylinder möglichst gut abdichten, um eine effiziente Umwandlung der beim Verbrennungsprozess freiwerdenden Energie in mechanische Arbeit zu gewährleisten.

Deshalb wird während des Betriebs des Grossdieselmotors üblicherweise ein Schmieröl als Schmiermittel in den Zylinder eingebracht, um zwischen der Lauffläche des Zylinders bzw. der Zylinderlaufbuchse und den Kolbenringen einen Schmierfilm auszubilden. Dabei können Teile des eingebrachten Schmiermittels auch in den Kolbenringnuten oder in Nuten in den Zylinderlaufbuchsen vorliegen. Der Schmierfilm ermöglicht eine gute Kolbenringbewegung im Zylinder und dient ferner dazu, den Verschleiss der Zylinderlauffläche bzw. der Lauffläche der Zylinderlaufbuchse, und der Kolbenringe möglichst gering zu halten. Ferner dient das Schmieröl der Neutralisierung aggressiver Verbrennungsprodukte sowie der Vermeidung von Korrosion. Aufgrund dieser zahlreichen Anforderungen werden als Schmieröle häufig sehr hochwertige und teure Substanzen verwendet.

Heute in Grossdieselmotoren eingesetzte Schmiervorrichtungen fördern das Schmiermittel, üblicherweise ein Schmieröl, durch die Wandung des Zylinders auf die Lauffläche oder direkt in das Kolbenringpaket des Kolbens, sodass die Kolbenringe während ihrer Bewegung das Schmiermittel auf der Lauffläche verteilen. Das Einbringen des Schmiermittels erfolgt durch Schmierstellen, welche typischerweise die Austrittsöffnungen von Düsen, Schmierstutzen oder sogenannter Quills bilden.

Für die Versorgung der einzelnen Schmierstellen wird üblicherweise eine Schmiermittelpumpe pro Zylinder eingesetzt, die sämtliche Schmierstellen dieses Zylinders mit Schmiermittel versorgt. Da in der Regel eine dosierte Abgabe des Schmiermittels in den Zylinder erfolgen soll, sind die Schmiermittelpumpen üblicherweise direkt am Zylinder oder in unmittelbarer Nähe des Zylinders angeordnet, sodass die von den Schmiermittelpumpen geförderten Schmiermittelmengen möglichst gut den Mengen entsprechen, die auch tatsächlich in den Zylinder eingebracht werden.

Insbesondere bei Grossdieselmotoren, die mit unterschiedlichen Brennstoffen betrieben werden können, ergibt sich das Problem, dass die Zylinderschmierung an den jeweiligen Brennstoff angepasst werden muss, um einen wirtschaftlichen, effizienten und verschleissarmen Betrieb des Grossdieselmotors zu gewährleisten. Denn die unterschiedlichen Brennstoffe führen zu Änderungen des tribologischen Systems Kolbenringe/Zylinderlauffläche, sodass das Schmiermittel an diese Änderungen angepasst werden muss.

Um dieses Problem zu adressieren, sind Schmiervorrichtungen bekannt, bei denen unterschiedliche Schmiermittel bereit gehalten werden, damit beim Umschalten des Grossdieselmotors auf einen anderen Brennstoff auch das Schmiermittel gewechselt werden kann. Üblicherweise umfasst die Schmiervorrichtung für einen Grossdieselmotor einen nach dem Common Rail Prinzip ausgestalteten Speicher für das Schmiermittel, aus dem heraus alle Schmiermittelpumpen für die Zylinder gespeist werden. Dieser Speicher kann dann mit einem ersten oder mit einem zweiten Schmiermittel befüllt werden.

Allerdings stellen die Verbindungsleitungen, die von den Schmiermitteltanks in den Speicher führen, sowie der Speicher selbst ein sehr grosses Volumen dar, welches bei dem Wechsel von dem ersten auf das zweite Schmiermittel komplett ausgetauscht werden muss. Dieser Austausch kann mehrere Stunden oder sogar einen ganzen Tag dauern, bedingt durch die kleinen Durchflussraten im Verhältnis zum Volumen der Leitungen und Speicher. Diese grosse Trägheit beim Wechsel von dem ersten auf das zweite Schmiermittel (oder umgekehrt) erfordert, dass der Wechsel bereits lange im Voraus antizipiert werden muss, um den Grossdieselmotor mit dem geeigneten Schmiermittel zu versorgen. Alternativ wäre ein Spülen der Leitung möglich, jedoch ist dies aufgrund der dabei anfallenden grossen Volumina von ausgespültem Öl, welches durch das unkontrollierte Mischverhältnis nicht mehr mit Sicherheit korrekt eingesetzt werden kann und somit entsorgt werden muss, ökonomisch unattraktiv. Häufig ist es aber gar nicht möglich, einen Wechsel des Brennstoffs so weit im Voraus zu planen. Auch gibt es Betriebszustände, bei denen der Grossdieselmotor in einem sogenannten Fuel Share Mode betrieben wird, in welchem beide Brennstoffe zum Betrieb des Grossdieselmotors gleichzeitig verwendet werden. Auf dadurch bedingte kurzfristige Änderungen kann die Schmiermittelvorrichtung aber nicht reagieren, weil ihre Trägheit für den Wechsel des Schmiermittels zu gross ist. Daraus kann eine nicht optimale Zylinderschmierung resultieren, die schwerwiegende schädliche Folgen für den Kolben, die Kolbenringe oder die Laufflächen im Zylinder haben kann. So kann beispielsweise eine unzureichend BN (base number) Zahl des aktuellen Schmiermittels zu Korrosion im Zylinder folgen, welche zum Fressen (scuffing) des Kolbens führen kann, wodurch teure und zeitaufwendige Reparaturarbeiten notwendig werden.

Ausgehend von diesem Stand der Technik ist es daher eine Aufgabe der Erfindung, eine Schmiervorrichtung für einen Grossdieselmotor vorzuschlagen, mit welcher die Zylinderschmierung sehr schnell und zuverlässig an den jeweiligen Betriebszustand des Grossdieselmotors, insbesondere an den oder die aktuell verwendeten Brennstoff(e) angepasst werden kann. Ferner ist es eine Aufgabe der Erfindung, ein entsprechendes Verfahren zur Zylinderschmierung eines Grossdieselmotors vorzuschlagen. Eine weitere Aufgabe der Erfindung ist es, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also eine Schmiervorrichtung für einen Grossdieselmotor vorgeschlagen, der mindestens einen Zylinder aufweist, in welchem ein Kolben entlang einer Lauffläche hin- und herbewegbar angeordnet ist, mit einem ersten Vorratsbehälter für ein erstes Schmiermittel zur Schmierung des Zylinders, mit einem zweiten Vorratsbehälter für ein zweites Schmiermittel zur Schmierung des Zylinders, mit einer Schmiermittelzuführung zum Einbringen des ersten oder des zweiten Schmiermittels in den Zylinder, mit einer Schmiermittelpumpe, mit welcher das erste oder das zweite Schmiermittel in die Schmiermittelzuführung förderbar ist, sowie mit einem Umschaltorgan, mit welchem der Schmiermittelpumpe wahlweise das erste oder das zweite Schmiermittel zuführbar ist, wobei zwischen dem Umschaltorgan und den Vorratsbehältern ein erster Zwischenspeicher und ein zweiter Zwischenspeicher vorgesehen ist, wobei der erste Zwischenspeicher über eine erste Versorgungsleitung mit dem ersten Vorratsbehälter verbunden ist, sowie über eine erste Zuführleitung mit dem Umschaltorgan, und wobei der zweite Zwischenspeicher über eine zweite Versorgungsleitung mit dem zweiten Vorratsbehälter verbunden ist, sowie über eine zweite Zuführleitung mit dem Umschaltorgan.

Dadurch, dass für jedes der beiden Schmiermittel jeweils ein Zwischenspeicher vorgesehen ist, der über das Umschaltorgan mit der Schmiermittelpumpe verbunden werden kann, werden beide Schmiermittel getrennt voneinander bis in die Nähe der Schmiermittelpumpe und damit bis in die Nähe des zu schmierenden Zylinders geführt. Bei einem Umschalten von dem ersten auf das zweite Schmiermittel existiert somit praktisch kein Totvolumen, das ausgetauscht werden müsste, bevor das zweite Schmiermittel in den Zylinder gelangt. Somit ist es möglich, im Wesentlichen ohne eine Verzögerung von dem ersten auf das zweite Schmiermittel (oder umgekehrt) umzustellen. Das zweite Schmiermittel steht also sofort im Zylinder zur Verfügung. Somit kann die Schmierung des Grossdieselmotors ohne Verzögerungen von einem Schmiermittel auf ein anderes Schmiermittel umgestellt werden. Dadurch lässt es sich erreichen, dass das im Zylinder vorliegende Schmiermittel immer optimal an den jeweiligen Betriebszustand des Motors und insbesondere an den aktuell verwendeten Brennstoff angepasst ist.

Die erfindungsgemässe Schmiervorrichtung bietet weiterhin den erheblichen Vorteil, dass auch Mischungen mit genau kontrollierbaren Verhältnissen der beiden Schmiermittel im Zylinder generiert werden können, wobei die Mischung der beiden Schmiermittel erst im Zylinder selbst erfolgt. Wenn also beispielsweise der aktuell verwendete Brennstoff oder das aktuell verwendete Brennstoffgemisch ein Schmiermittel verlangt, dessen Eigenschaften irgendwo zwischen den Eigenschaften des ersten Schmiermittels und den Eigenschaften des zweiten Schmiermittels liegt, kann durch wechselweises Zuführen des ersten und des zweiten Schmiermittels im Zylinder eine geeignete Mischung der beiden Schmiermittel erzeugt werden, die optimal für den aktuellen Brennstoff ist. Somit kann auch für solche Betriebsbedingungen, in denen weder das erste noch das zweite Schmiermittel optimal für die aktuell erforderliche Schmierung im Zylinder ist, durch das Mischen der beiden Schmiermittel im Zylinder eine optimale Schmierung gewährleistet werden. Die Mischung der beiden Schmiermittel erfolgt dabei im Zylinder durch die Bewegung des Kolbens bzw. der Kolbenringe. Das gemischte Schmiermittelvolumen ist dabei im Wesentlichen das Volumen des Schmiermittelfilms auf der Lauffläche und das Schmiermittelvolumen, welches in den Kolbenringnuten vorliegt. Somit können gewünschte Änderungen des Schmiermittels bzw. der Schmiermittelzusammensetzung instantan realisiert werden, indem das dem Zylinder zugeführte Schmiermittel oder das Verhältnis, mit welchem die beiden Schmiermittel dem Zylinder zugeführt werden, geändert wird.

Das Umschaltorgan, mittels welchem die Schmiermittelpumpe wahlweise mit dem ersten oder mit dem zweiten Schmiermittel gespeist werden kann, ist beispielsweise als ansteuerbares 3/2-Wege Ventil ausgestaltet. Dabei ist es möglich, dass das Umschaltorgan ein separates Bauteil ist, welches stromaufwärts der Schmiermittelpumpe angeordnet ist. Gemäss einer ebenfalls bevorzugten Ausführungsform ist das Umschaltorgan in die Schmiermittelpumpe integriert.

Natürlich sind auch andere Ausgestaltungen des Umschaltorgans möglich, beispielsweise Ausgestaltungen als frei einstellbares Ventil, das z. B. als Proportionalventil oder als ein Servoventil ausgebildet sein kann.

Vorzugsweise umfasst die Schmiervorrichtung eine Mehrzahl von Schmiermittelpumpen, sowie eine Mehrzahl von Schmiermittelzuführungen, wobei jede Schmiermittelpumpe jeweils mit dem ersten Zwischenspeicher und mit dem zweiten Zwischenspeicher verbindbar ist, und wobei jede Schmiermittelpumpe mit genau einer Schmiermittelzuführung verbunden ist. Besonders bevorzugt entspricht die Anzahl der Schmiermittelpumpen und die Anzahl der Schmiermittelzuführungen jeweils der Anzahl der Zylinder des Grossdieselmotors, sodass für jeden Zylinder genau eine jeweils separate Schmiermittelpumpe mit jeweils einer Schmiermittelzuführung vorgesehen ist. Ferner ist es bevorzugt, wenn jede Schmiermittelzuführung eine Mehrzahl von Öffnungen aufweist, durch welche das jeweilige Schmiermittel an verschiedene Stellen des Zylinders einbringbar ist. Hierdurch lässt sich eine möglichst gute Verteilung des Schmiermittels im Zylinder gewährleisten. Diese Öffnungen können dabei als Austrittsöffnungen von Düsen ausgestaltet sein, mit denen das jeweilige Schmiermittel, beispielsweise als Strahl, in den Zylinder oder auf die Lauffläche gespritzt wird, oder als Austrittsöffnungen von Zerstäubern, mit denen das Schmiermittel in Form eines Nebels in den Zylinder eingebracht wird, oder auch als Austrittsöffnungen von sogenannten Quills, mit denen das Schmiermittel auf die Lauffläche aufgebracht wird.

Vorzugsweise ist jede Schmiermittelpumpe als volumetrische Pumpe, insbesondere als Dosierpumpe ausgestaltet, mit welcher das pro Schmiervorgang geförderte Volumen an Schmiermittel festgelegt werden kann. Auch ist es möglich, die Schmiermittelpumpe als Membranpumpe auszugestalten.

Die Versorgung der beiden Zwischenspeicher mit dem ersten bzw. zweiten Schmiermittel aus den Vorratsbehältern kann beispielsweise nur mit Hilfe der Gravitation erfolgen. Die beiden Vorratsbehälter sind dann so angeordnet, dass der hydrostatische Druck des jeweiligen Schmiermittels in den Vorratsbehältern gross genug ist, um das jeweilige Schmiermittel in den jeweiligen Zwischenspeicher zu fördern. Es ist aber auch eine bevorzugte Ausgestaltung, in der ersten Versorgungsleitung und in der zweiten Versorgungsleitung jeweils eine Förderpumpe vorzusehen, um das jeweilige Schmiermittel aus dem ersten bzw. aus dem zweiten Vorratsbehälter in den ersten bzw. in den zweiten Zwischenspeicher zu fördern.

Gemäss einer bevorzugten Ausgestaltung sind der erste und der zweite Zwischenspeicher jeweils als rohrförmiger, im Wesentlichen zylindrischer Speicher ausgestaltet. Diese Ausgestaltung entspricht dem häufig in Grossdieselmotoren verwendeten Common Rail Prinzip.

Dabei ist es besonders bevorzugt, wenn der Innendurchmesser des ersten Zwischenspeichers und der Innendurchmesser des zweiten Zwischenspeichers mindestens das 1,5-fache, vorzugsweise mindestens das Doppelte beträgt wie der Innendurchmesser der ersten bzw. der zweiten Versorgungsleitung, die mit dem jeweiligen Zwischenspeicher verbunden ist. Dadurch können die beiden Zwischenspeicher jeweils als Puffer bzw. als Dämpfungsglieder wirken, mit denen sich Druckschläge oder Druckschwankungen insbesondere am Eingang der Schmiermittelpumpe vermeiden lassen.

Durch die Erfindung wird ferner ein Verfahren zur Zylinderschmierung eines Grossdieselmotors vorgeschlagen, der mindestens einen Zylinder aufweist, in welchem ein Kolben entlang einer Lauffläche hin- und herbewegbar angeordnet ist, bei welchem Verfahren mittels einer Schmiermittelzuführung wahlweise ein erstes Schmiermittel aus einem ersten Vorratsbehälter, oder ein zweites Schmiermittel aus einem zweiten Vorratsbehälter in den Zylinder eingebracht wird, wobei das erste oder das zweite Schmiermittel von einer Schmiermittelpumpe in die Schmiermittelzuführung gefördert wird, und wobei der Schmiermittelpumpe über ein Umschaltorgan wahlweise das erste oder das zweite Schmiermittel zugeführt wird, wobei der Schmiermittelpumpe das erste oder das zweite Schmiermittel jeweils aus einem ersten Zwischenspeicher oder aus einem zweiten Zwischenspeicher zugeführt wird, wobei der erste Zwischenspeicher über eine erste Versorgungsleitung mit dem ersten Vorratsbehälter verbunden ist, sowie über eine erste Zuführleitung mit dem Umschaltorgan, und wobei der zweite Zwischenspeicher über eine zweite Versorgungsleitung mit dem zweiten Vorratsbehälter verbunden ist, sowie über eine zweite Zuführleitung mit dem Umschaltorgan.

Wie dies bereits im Zusammenhang mit der Vorrichtung erläutert wurde, ermöglicht es auch das erfindungsgemässe Verfahren, das aktuell im Zylinder vorliegende Schmiermittel bzw. seine Zusammensetzung quasi instantan zu ändern, um somit die Zylinderschmierung jeweils optimal an die aktuellen Betriebsbedingungen, insbesondere an den aktuell verwendeten Brennstoff anzupassen.

Vorzugsweise wird während eines Arbeitszyklus genau eines der beiden Schmiermittel in den Zylinder eingebracht.

Gemäss einer bevorzugten Ausführungsform wird in dem Zylinder eine Mischung aus dem ersten und dem zweiten Schmiermittel generiert. Hierdurch lässt sich auch für solche Betriebszustände des Grossdieselmotors eine optimale Zylinderschmierung erreichen, in denen weder das erste noch das zweite Schmiermittel optimal ist.

Dabei wird vorzugsweise die Zusammensetzung der Mischung über die Anzahl der Arbeitszyklen eingestellt, in denen das erste Schmiermittel in den Zylinder eingebracht wird, und die Anzahl der Arbeitszyklen, in denen das zweite Schmiermittel in den Zylinder eingebracht wird. Wird beispielsweise für eine optimale Zylinderschmierung eine Mischung des ersten und des zweiten Schmiermittels in einem Verhältnis von 2:1 benötigt, so wird während zwei Arbeitszyklen des Grossdieselmotors das erste Schmiermittel in den Zylinder eingebracht, im dritten Arbeitszyklus wird dann das zweite Schmiermittel in den Zylinder eingebracht, im vierten und fünften Arbeitszyklus wird wieder das erste Schmiermittel eingebracht, im sechsten Arbeitszyklus wieder das zweite Schmiermittel usw.

Durch die Erfindung wird ferner ein Grossdieselmotor vorgeschlagen, welcher eine erfindungsgemässe Schmiervorrichtung umfasst, oder welcher mit einem erfindungsgemässen Verfahren zur Zylinderschmierung betrieben wird.

In einer bevorzugten Ausführungsform ist der Grossdieselmotor als Dual-Fuel Motor zur Verbrennung eines gasförmigen Brennstoffs und zur Verbrennung eines flüssigen Brennstoffs ausgestaltet.

Gemäss einer besonders bevorzugten Ausführungsform ist der Grossdieselmotor als längsgespülter Zweitakt-Grossdieselmotor ausgestaltet. Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Darstellung eines ersten Ausführungsbeispiels eines erfindungsgemässen Grossdieselmotors mit einem ersten Ausführungsbeispiel einer erfindungsgemässen Schmiervorrichtung,
- Fig.2:: eine schematische Darstellung zur Veranschaulichung des Schmiermittelvolumens im Zylinder,
- Fig. 3:: ein schematisches Diagramm zur Veranschaulichung eines ersten Beispiels zur Generierung einer Mischung von zwei Schmiermitteln im Zylinder, und
- Fig. 4:: ein schematisches Diagramm zur Veranschaulichung eines zweiten Beispiels zur Generierung einer Mischung von zwei Schmiermitteln im Zylinder.

Bei der folgenden Beschreibung der Erfindung wird mit beispielhaftem Charakter auf den für die Praxis besonders wichtigen Fall eines Grossdieselmotors Bezug genommen, der als längsgespülter Zweitakt-Grossdieselmotor ausgestaltet ist, und der als Hauptantriebsaggregat eines Schiffes verwendet wird. Natürlich ist die Erfindung nicht auf diesen Typ von Grossdieselmotor und auf diese Verwendung beschränkt, sondern betrifft Grossdieselmotoren im Allgemeinen. Der Grossdieselmotor kann beispielsweise auch als Viertakt-Motor ausgestaltet sein. Wie eingangs bereits erläutert, sind im Rahmen dieser Anmeldung mit dem Begriff "Grossdieselmotor" auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden können.

Die Erfindung ist insbesondere auch für solche Grossdieselmotoren geeignet, die mit mindestens zwei unterschiedlichen Brennstoffen betreibbar sind. Dabei ist es insbesondere möglich, dass beide Brennstoffe flüssige Brennstoffe sind, oder dass einer der Brennstoffe flüssig ist und der andere Brennstoff gasförmig.

Im speziellen wird im Folgenden mit beispielhaftem Charakter auf einen solchen längsgespülten Zweitakt-Grossdieselmotor Bezug genommen, der mit zwei unterschiedlichen Brennstoffen oder Mischungen dieser beiden unterschiedlichen Brennstoffe betrieben werden kann. Der Grossdieselmotor ist beispielsweise ein eingangs erläuterter Dual-Fuel-Motor, der einerseits in einem Gasmodus betreibbar ist, in welchem ein Gas, z.B. ein Erdgas, verbrannt wird, und der andererseits in einem Flüssigmodus, in welchem ein geeigneter flüssiger Brennstoff wie Methanol, Benzin, Diesel, Schweröl oder andere geeignete flüssige Brennstoffe verbrannt wird, betreibbar ist.

Als gasförmige Brennstoffe eignen sich alle an sich bekannten Gase, welche als Brennstoffe in Grossdieselmotoren eingesetzt werden, insbesondere Erdgase wie LNG (liquefied natural gas). Als flüssige Brennstoffe eignen sich alle an sich bekannte flüssige Brennstoffe, welche zum Betreiben von Grossdieselmotoren verwendet werden, insbesondere Schweröl, Diesel, Methanol, Emulsionen wie beispielsweise MSAR (Multiphase Superfine Atomised Residue), oder Suspensionen wie beispielsweise Kohlenstaub-Wasser-Suspensionen. MSAR bezeichnet dabei Emulsionen, die im Wesentlichen aus einem schweren Kohlenwasserstoff, z. B. Bitumen, Schweröl oder ähnliches, und Wasser bestehen.

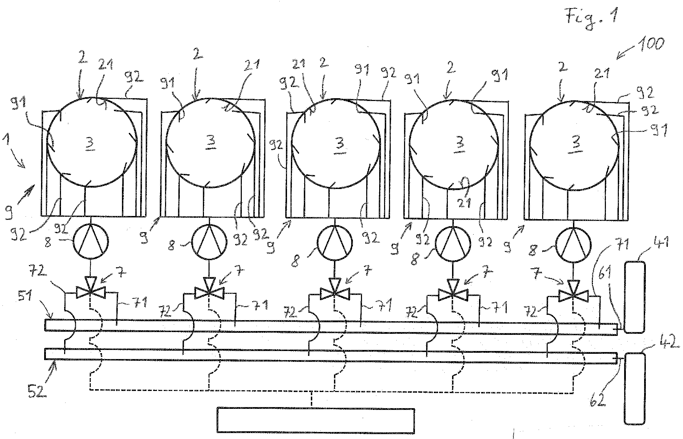

Fig. 1 zeigt in einer schematischen Darstellung ein erstes Ausführungsbeispiel eines erfindungsgemässen Grossdieselmotors mit einem ersten Ausführungsbeispiel einer erfindungsgemässen Schmiervorrichtung.

Der Grossdieselmotor ist gesamthaft mit dem Bezugszeichen 100 bezeichnet und als längsgespülter Dual-Fuel Zweitakt-Grossdieselmotor ausgestaltet. Das Schmiersystem ist gesamthaft mit dem Bezugszeichen 1 bezeichnet.

Der Grossdieselmotor 100 umfasst in an sich bekannter Weise eine Mehrzahl von Zylindern 2, beispielsweise sechs bis zwölf Zylinder oder noch mehr, von denen in Fig. 1 mit beispielhaftem Charakter fünf Zylinder 2 dargestellt sind. In jedem Zylinder 2 ist ein Kolben 3 vorgesehen, der jeweils entlang einer Lauffläche 21 des Zylinders 2 zwischen einem oberen und einem unteren Totpunkt hin- und her bewegbar angeordnet ist, und dessen Oberseite gemeinsam mit einem Zylinderdeckel einen Brennraum begrenzt. In den Brennraum wird mittels einer nicht dargestellten Einspritzvorrichtung in an sich bekannter Weise ein Brennstoff eingespritzt.

Dazu umfasst die Einspritzvorrichtung für jeden Zylinder 2 mindestens eine, üblicherweise aber mehrere Einspritzdüsen zum Einspritzen des Brennstoffs in den Brennraum. Insbesondere beim Verwenden von flüssigen Brennstoffen sind die Einspritzdüsen üblicherweise im Zylinderdeckel angeordnet. Für gasförmige Brennstoffe ist es auch bekannt, die Einspritzdüsen in der seitlichen Zylinderwand vorzusehen, beispielsweise auf einer Höhe, die etwa in der Mitte zwischen dem oberen und dem unteren Totpunkt des Kolbens 3 liegt.

Der Aufbau und die einzelnen Komponenten des Grossdieselmotors 100, wie beispielsweise Einzelheiten des Einspritzsystems, das Gaswechselsystem, das Abgassystem oder das Turboladersystem für die Bereitstellung der Spülbzw. Ladeluft, sowie das Kontroll- und Steuerungssystem für einen Grossdieselmotor 100 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem hier beschriebenen ersten Ausführungsbeispiel eines längsgespülten Zweitakt-Grossdieselmotors 100 sind üblicherweise im unteren Bereich eines jeden Zylinders 2 bzw. Zylinderliners Spülluftschlitze (nicht dargestellt) vorgesehen, die durch die Bewegung des Kolbens 3 im Zylinder periodisch verschlossen und geöffnet werden, sodass die von dem Turbolader unter einem Ladedruck bereitgestellte Spülluft durch die Spülluftschlitze in den Zylinder 2 einströmen kann, solange diese geöffnet sind. Im Zylinderdeckel ist ein meistens zentral angeordnetes Auslassventil (nicht dargestellt) vorgesehen, durch welches die Verbrennungsgase nach dem Brennprozess aus dem Zylinder 2 in das Abgassystem ausgetragen werden können.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) und die Betätigung des Auslassventils, steuern bzw. regeln lassen.

Bei einem Dual-Fuel Grossdieselmotor 100 sind üblicherweise zwei unterschiedliche Einspritzsysteme vorgesehen, nämlich ein Einspritzsystem für den flüssigen Brennstoff und ein Einspritzsystem für den gasförmigen Brennstoff. Das Einspritzsystem für den flüssigen Brennstoff umfasst mindestens eine, aber typischerweise mehrere Einspritzdüsen, die im Zylinderdeckel des Zylinders angeordnet sind. Das Einspritzsystem für den gasförmigen Brennstoff ist in an sich bekannter Weise als ein Gaseinspritzsystem ausgestaltet. Vorzugsweise sind die Einspritzvorrichtungen bzw. die zu ihnen gehörenden Einspritzdüsen für gasförmigen Brennstoff seitlich am jeweiligen Zylinder 2, also an der Zylindermantelfläche angeordnet, beispielsweise auf einer Höhe, die etwa in der Mitte zwischen dem oberen und dem unteren Totpunkt des Kolbens liegt. Dies ist insbesondere im Falle eines Niederdruckgassystems so.

Es versteht sich, dass bei anderen Ausgestaltungen des Grossdieselmotors 100 auch nur ein Einspritzsystem vorgesehen sein kann. Insbesondere bei solchen Ausgestaltungen, bei denen der Grossdieselmotor 100 mit zwei unterschiedlichen flüssigen Brennstoffen betreibbar ist, können mit dem gleichen Einspritzsystem wahlweise der eine oder der andere Brennstoff in den Brennraum des Zylinders 2 eingebracht werden.

Zur Schmierung der Zylinder 2 des Grossdieselmotors 100 ist die Schmiervorrichtung 1 vorgesehen. Die Schmiervorrichtung 1 umfasst einen ersten Vorratsbehälter 41 für ein erstes Schmiermittel, der über eine erste Versorgungsleitung 61 mit einem ersten Zwischenspeicher 51 verbunden ist, und einen zweiten Vorratsbehälter 42, für ein zweites Schmiermittel, der über eine zweite Verbindungsleitung 62 mit einem zweiten Zwischenspeicher 52 verbunden ist.

Die Schmiervorrichtung 1 umfasst ferner für jeden Zylinder 2 eine Schmiermittelpumpe 8, um dem jeweiligen Zylinder 2 das erste oder das zweite Schmiermittel zuzuführen. Dabei ist vorzugsweise für jeden Zylinder 2 eine separate Schmiermittelpumpe 8 vorgesehen, sodass die Anzahl der Schmiermittelpumpen 8 gleich der Anzahl der Zylinder 2 des Grossdieselmotors 100 ist. Jede Schmiermittelpumpe 8 ist als volumetrische Pumpe, vorzugsweise als Dosierpumpe ausgestaltet, mit welcher jeweils eine definierte Menge an Schmiermittel pro Arbeitszyklus des Grossdieselmotors 100 in den jeweiligen Zylinder einbringbar ist. Jede Schmiermittelpumpe 8 ist beispielsweise als volumetrische Pumpe mit einem in einem Zylinder angeordneten Arbeitskolben ausgestaltet, welcher pro Hub die vorbestimmte Menge an Schmiermittel fördert. Es ist jedoch auch möglich, die Schmiermittelpumpen 8 jeweils als Membranpumpen oder als andere Fördervorrichtungen auszugestalten.

Jede Schmiermittelpumpe 8 ist jeweils an dem Zylinder 2 oder in unmittelbarere Nähe des Zylinders 2 angeordnet, der von dieser Schmiermittelpumpe 8 versorgt wird, sodass die von der Schmiermittelpumpe 8 jeweils geförderte Menge von Schmiermittel möglichst gut mit derjenigen Menge übereinstimmt, die auch tatsächlich in den Zylinder eingebracht wird.

Stromabwärts jeder Schmiermittelpumpe 8 ist jeweils eine Schmiermittelzuführung 9 vorgesehen, mit welcher das von der Schmiermittelpumpe 8 geförderte Schmiermittel in den jeweiligen Zylinder 2 eingebracht bzw. auf die Lauffläche 21 des jeweiligen Zylinders 2 aufgebracht wird. Jede Schmiermittelzuführung 9 umfasst vorzugsweise eine Mehrzahl von Öffnungen 91, durch welche das jeweilige Schmiermittel an verschiedenen Stellen des Zylinders 2 einbringbar ist, sodass das Schmiermittel möglichst gleichmässig über die gesamte Lauffläche 21 des Zylinders 2 verteilt wird.

Bei dem in Fig. 1 dargestellten Ausführungsbeispiel umfasst jede Schmiermittelzuführung 9 beispielsweise insgesamt acht Öffnungen 91, die äquidistant über den Umfang des Zylinders 2 verteilt sind. Die mit dem Ausgang der Schmiermittelpumpe 8 verbundene Leitung der Schmiermittelzuführung 9 verzweigt sich stromabwärts der Schmiermittelpumpe 8 in acht Kanäle 92, von denen jeder jeweils zu einer der Öffnungen 91 führt. Die Öffnungen 91 können dabei beispielsweise als Düsen ausgestaltet sein, durch welche das Schmiermittel in Form eines Strahls auf die Lauffläche 21 aufgespritzt wird, , oder als Quills, aus denen das Schmiermittel heraus auf die Lauffläche 21 tropft oder fliesst.

Stromaufwärts der jeweiligen Schmiermittelpumpe 8 ist ein Umschaltorgan 7 vorgesehen, welches den Eingang der Schmiermittelpumpe 8 wahlweise mit dem ersten oder mit dem zweiten Zwischenspeicher 51, 52 verbindet. Das Umschaltorgan 7 ist beispielsweise als ansteuerbares 3/2-Wege Ventil ausgestaltet. Das Umschaltorgan 7 ist ausgangsseitig mit dem Eingang der Schmiermittelpumpe 8 verbunden. Eingangsseitig ist das Umschaltorgan 7 über eine erste Zuführleitung 71 mit dem ersten Zwischenspeicher 51 verbunden sowie über eine zweite Zuführleitung 72 mit dem zweiten Zwischenspeicher 52. Durch entsprechende Betätigung öffnet das Umschaltorgan 7 somit entweder über die erste Zuführleitung 71 eine Strömungsverbindung zwischen dem ersten Zwischenspeicher 51 und der Schmiermittelpumpe 8, oder über die zweite Zuführleitung 72 eine Strömungsverbindung zwischen dem zweiten Zwischenspeicher 52 und der Schmiermittelpumpe 8. Somit kann die Schmiermittelpumpe 8 wahlweise entweder mit dem ersten oder mit dem zweiten Schmiermittel gespeist werden.

Natürlich ist es alternativ auch möglich, jedes Umschaltorgan 7 als frei einstellbares Ventil, beispielsweise als Proportionalventil oder als Servoventil auszugestalten, mit welchen ein einstellbarer Anteil des ersten Schmiermittels und ein einstellbarer Anteil des zweiten Schmiermittels der jeweiligen Schmiermittelpumpe 8 zugeführt wird.

Der erste Zwischenspeicher 51 und der zweite Zwischenspeicher 52 sind jeweils nach dem Common Rail Prinzip ausgestaltet. Beide Zwischenspeicher 51, 52 sind jeweils als rohrförmige, im Wesentlichen zylindrische Speicher oder Druckspeicher ausgestaltet, die während des Betriebs vollständig mit dem ersten bzw. zweiten Schmiermittel gefüllt sind. Derartiger Speicher 51, 52 werden auch als Akkumulatoren bezeichnet. Je nach Ausgestaltung beträgt der Druck des jeweiligen Schmiermittels in den Zwischenspeichern 51, 52 beispielsweise 1 - 20 bar.

Die Zwischenspeicher 51, 52 sind während des Betriebs vollständig mit dem ersten bzw. dem zweiten Schmiermittel gefüllt und dienen in erster Linie als Dämpfungsglieder, um Druckschwankungen oder Druckschläge insbesondere am Eingang der Schmiermittelpumpe 8 zu vermeiden. Dazu ist es vorteilhaft, wenn die Zwischenspeicher 51, 52 jeweils einen Innendurchmesser aufweisen, der grösser ist als der Innendurchmesser der jeweiligen Versorgungsleitung 61, 62, welche den jeweiligen Zwischenspeicher 51, 52 mit dem jeweiligen Vorratsbehälter 41, 42 verbindet. Vorzugsweise ist der Innendurchmesser des ersten und des zweiten Zwischenspeichers 51, 52 mindestens 1,5 mal so gross, und besonders bevorzugt mindestens doppelt so gross, wie der Innendurchmesser der ersten bzw. der zweiten Versorgungsleitung 61 bzw. 62.

Wie bereits erwähnt, umfasst die Schmiervorrichtung 1 vorzugsweise für jeden Zylinder 2 eine separate Schmiermittelpumpe 8. Jede der Schmiermittelpumpen 8 ist jeweils über das ihr zugeordnete Umschaltorgan 7 und die jeweilige erste Zuführleitung 71 mit dem ersten Zwischenspeicher 51 verbindbar, oder über das Umschaltorgan 7 und die jeweilige zweite Zuführleitung 72 mit dem zweiten Zwischenspeicher 72.

Die Umschaltorgane 7 können dabei jeweils als von der zugehörigen Schmiermittelpumpe 8 separierte Bauteile ausgestaltet sein, die stromaufwärts des Eingangs der jeweiligen Schmiermittelpumpe 8 angeordnet sind. Alternativ ist es auch möglich, dass das Umschaltorgan 7 in die jeweilige Schmiermittelpumpe 8 integriert ist, also jeweils ein integraler Bestandteil der Schmiermittelpumpe 8 ist.

Bei dem ersten Ausführungsbeispiel erfolgt die Förderung des ersten Schmiermittels aus dem ersten Vorratsbehälter 41 in den ersten Zwischenspeicher 51 sowie die Förderung des zweiten Schmiermittels aus dem zweiten Vorratsbehälter 42 in den zweiten Zwischenspeicher 52 nur mittels Gravitation. Das heisst, die Vorratsbehälter 41, 42 sind relativ zu den Zwischenspeichern 51, 52 so angeordnet, dass der hydrostatische Druck der Schmiermittel in den Vorratsbehältern 41, 42 ausreicht, um die Schmiermittel aus den Vorratsbehältern 41, 42 in die Zwischenspeicher 51, 52 zu fördern. Dies lässt sich erreichen, indem die Vorratsbehälter 41, 42 jeweils höher angeordnet werden als die zugehörigen Zwischenspeicher 51, 52.

Als Schmiermittel sind prinzipiell alle Schmiermittel, insbesondere Schmieröle, geeignet, die üblicherweise für Grossdieselmotoren verwendet werden. Für das hier beschriebene Ausführungsbeispiel eines Grossdieselmotors 100, der mit zwei unterschiedlichen Brennstoffen betrieben werden kann, wird als erstes Schmiermittel vorzugsweise ein Schmieröl verwendet, das für den Betrieb mit dem ersten Brennstoff eine optimale Schmierung im Zylinder 2 gewährleistet, und als zweites Schmiermittel ein Schmieröl, das für den Betrieb mit dem zweiten Brennstoff eine optimale Schmierung im Zylinder gewährleistet. Im Falle des Dual-Fuel Grossdieselmotors ist dann beispielsweise das erste Schmiermittel für den Betrieb des Grossdieselmotors 100 mit dem flüssigen Brennstoff, beispielsweise Schweröl, optimiert, während das zweite Schmiermittel für den Betrieb des Grossdieselmotors 100 im Gasmodus optimiert ist.

Wird der Grossdieselmotor 100 dann im Flüssigmodus, also beispielsweise mit Schweröl, betrieben, so wird jedes Umschaltorgan 7 derart angesteuert, dass es die Strömungsverbindung zwischen dem ersten Zwischenspeicher 51 und der jeweiligen Schmiermittelpumpe 8 über die jeweilige erste Zuführleitung 71 öffnet, sodass das erste Schmiermittel von der Schmiermittelpumpe 8 über die Schmiermittelzuführung 9 in den Zylinder 2 eingebracht wird.

Wird der Grossdieselmotor 100 in den Gasmodus umgeschaltet, so werden die Umschaltorgane 7 derart angesteuert, dass die Strömungsverbindung durch die ersten Zuführleitungen unterbrochen wird, und dass die Strömungsverbindung zwischen dem zweiten Zwischenspeicher 52 und der jeweiligen Schmiermittelpumpe 8 über die jeweilige zweite Zuführleitung 72 geöffnet wird, sodass das zweite Schmiermittel von der Schmiermittelpumpe 8 über die Schmiermittelzuführung 9 in den Zylinder 2 eingebracht wird.

Der Wechsel von dem ersten auf das zweite Schmiermittel erfolgt dabei praktisch instantan, weil ja beide Schmiermittel über die erste bzw. zweite Zuführleitung 71, 72 an dem Umschaltorgan 7 anliegen, sodass beim Wechsel von dem einen auf das andere Schmiermittel praktisch kein oder nur ein vernachlässigbar kleines Totvolumen ausgetauscht werden muss.

Ein weiterer Vorteil der erfindungsgemässen Lösung besteht darin, dass auch Mischungen der beiden Schmiermittel im Zylinder 2 generiert werden können. Dies kann beispielsweise in solchen Betriebszuständen vorteilhaft sein, in welchen der Grossdieselmotor in einem sogenannten "shared fuel" Modus betrieben wird, indem beide Brennstoffe gleichzeitig im Zylinder 2 verbrannt werden. Bei solchen oder anderen Betriebszuständen, in denen keines der beiden vorhandenen Schmiermittel optimal für die aktuelle Schmierung im Zylinder ist, kann dann durch ein volumetrisches Mischen der beiden Schmiermittel im Zylinder 2 eine Mischung generiert werden, welche dann für diesen Betriebszustand eine optimale Schmierung im Zylinder 2 gewährleistet.

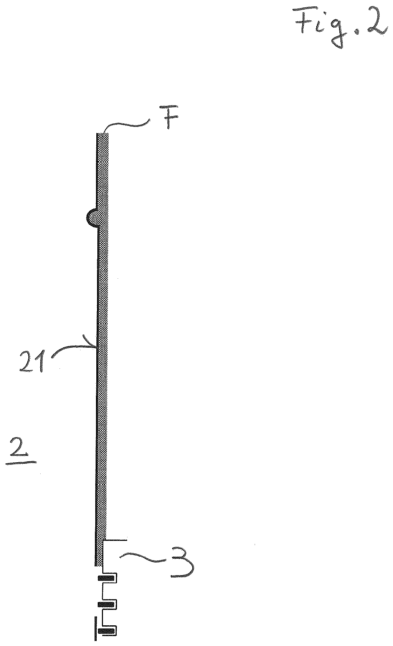

Zum besseren Verständnis zeigt Fig. 2 eine schematische Darstellung zur Veranschaulichung des Schmiermittelvolumens im Zylinder. Auf der Lauffläche 21 des Zylinders 2 bildet sich durch das Einbringen des Schmiermittels oder der Schmiermittel sowie durch die Kolbenbewegung ein Schmierfilm F aus, der eine Mischung aus dem ersten und dem zweiten Schmiermittel enthalten kann.

Soll im Zylinder 2 Schmierfilm F generiert werden, der eine Mischung aus dem ersten und dem zweiten Schmiermittel darstellt, so wird die Zusammensetzung der Mischung aus dem ersten und dem zweiten Schmiermittel vorzugsweiseüber die Anzahl der Arbeitszyklen eingestellt, in denen das erste Schmiermittel in den Zylinder 2 eingebracht wird, und die Anzahl der Arbeitszyklen, in denen das zweite Schmiermittel in den Zylinder 2 eingebracht wird. Soll beispielsweise im Zylinder eine Mischung der beiden Schmiermittel im Verhältnis 1:1 erfolgen, so kann wechselweise das erste und das zweite Schmiermittel in den Zylinder 2 eingebracht werden. Das heisst, während eines Arbeitszyklus des Grossdieselmotors 100 bzw. des jeweiligen Zylinders 2 wird das erste Schmiermittel in den Zylinder 2 eingebracht, während des nächsten Arbeitszyklus wird dann das zweite Schmiermittel in den Zylinder 2 eingebracht, im nächsten Arbeitszyklus wieder das erste Schmiermittel usw.

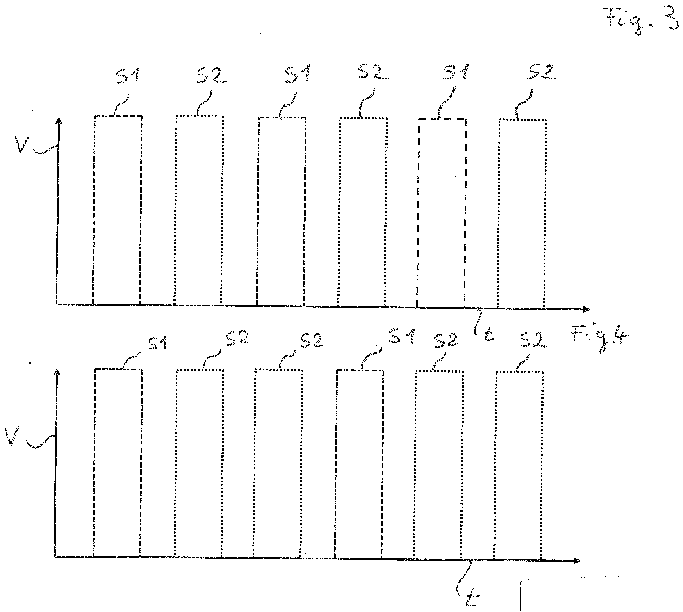

Dies wird im Folgenden anhand von zwei Beispielen sowie der Fig. 3 und der Fig. 4 näher erläutert.

In den Fig. 3 und 4 ist jeweils die horizontale Achse t eine Zeitachse und die vertikale Achse V eine Volumenachse. Es sind jeweils sechs aufeinanderfolgende Schmiervorgänge dargestellt, in denen dem Zylinder 2 Schmiermittel zugeführt wird. Die sechs Schmiervorgänge erfolgen beispielsweise in sechs aufeinanderfolgenden Arbeitszyklen des Grossdieselmotors 1. Jeder Schmiervorgang wird jeweils durch ein Rechteck in der Fig. 3 bzw. in der Fig. 4 dargestellt. Die Höhe des jeweiligen Rechtecks - also seine Erstreckung in Richtung der V-Achse - gibt das Volumen an Schmiermittel an, welches bei dem jeweiligen Schmiervorgang in den Zylinder 2 eingebracht wird. Wie dies zu erkennen ist, wird sowohl bei dem ersten Beispiel in Fig. 3 als auch bei dem zweiten Beispiel in Fig. 4 bei jedem Schmiervorgang jeweils das gleiche Volumen an Schmiermittel in den Zylinder eingebracht.

Sowohl in Fig. 3 als auch in Fig. 4 repräsentieren die gestrichelt dargestellten Rechtecke solche Schmiervorgänge S1, bei denen nur das erste Schmiermittel in den Zylinder 2 eingebracht wird, und die gepunktet dargestellten Rechtecke solche Schmiervorgänge S2, bei denen nur das zweite Schmiermittel in den Zylinder eingebracht wird.

Bei dem ersten in Fig. 3 dargestellten Beispiel hat das erste Schmiermittel einen BN Wert (BN: base number, Basenzahl) von 140 und das zweite Schmiermittel einen BN Wert von 40. Der gewünschte Zielwert für den Schmierfilm F auf der Lauffläche 21 ist der BN Wert 90. Dieser BN Wert 90 im Schmierfilm F wird nun dadurch realisiert, dass immer wechselweise das erste Schmiermittel und das zweite Schmiermittel in den Zylinder 2 eingebracht werden, wobei der Wechsel bei jedem Schmiervorgang erfolgt. Das erste und das zweite Schmiermittel werden also im Verhältnis 1:1 gemischt.

Bei dem zweiten in Fig. 4 dargestellten Beispiel hat das erste Schmiermittel einen BN Wert von 100 und das zweite Schmiermittel einen BN Wert von 40. Der gewünschte Zielwert für den Schmierfilm F auf der Lauffläche 21 ist der BN Wert 60. Dieser BN Wert 60 im Schmierfilm F wird nun dadurch realisiert, dass zunächst ein Schmiervorgang mit dem ersten Schmiermittel durchgeführt wird , und die beiden folgenden Schmiervorgänge mit dem zweiten Schmiermittel. Dann erfolgt wieder ein Schmiervorgang mit dem ersten Schmiermittel und zwei mit dem zweiten Schmiermittel. Das erste und das zweite Schmiermittel werden also im Verhältnis 1:2 gemischt.

Die Wahl von geeigneten ersten bzw. zweiten Schmiermitteln richtet sich unter anderem nach den Brennstoffen, mit denen der Grossdieselmotor 100 betrieben wird. Ein wesentliches Kriterium für die Auswahl eines geeigneten Schmiermittels ist beispielsweise der Schwefelgehalt des jeweiligen Brennstoffs. Dieser kann für den jeweiligen Brennstoff bekannt sein oder er kann auch während des Betriebs des Grossdieselmotors 100 messtechnisch bestimmt bzw. überwacht werden. Werden dabei Änderungen im Schwefelgehalt (oder einer anderen repräsentativen Grösse) detektiert, so kann durch das vorangehend beschriebene Mischen der beiden Schmiermittel erreicht werden, dass die Zylinderschmierung auch für diesen geänderten Schwefelgehalt optimal ist.

Eine weitere Möglichkeit im Rahmen des erfindungsgemässen Verfahrens besteht darin, dass ein Teil des benutzen ersten oder zweiten Schmiermittels oder Mischungen davon aus dem Zylinder abgeführt oder entnommen werden und dann anhand einer Analyse untersucht wird, ob die Schmierung im Zylinder noch optimal ist. Falls dem nicht so ist, kann beispielsweise durch eine Änderung des Mischungsverhältnisses der beiden Schmiermittel die Zylinderschmierung verbessert werden. Charakteristische Grössen für die Beurteilung des benutzten Schmiermittels sind beispielsweise der Eisengehalt des benutzten Schmiermittels oder die Änderung seiner Basenzahl (BN-Zahl) gemessen in Äquivalenten von Kaliumhydroxid pro Schmiermittelmenge.

Bei einem zweiten Ausführungsbeispiel eines erfindungsgemässen Grossdieselmotors 100 mit einem zweiten Ausführungsbeispiel einer erfindungsgemässen Schmiervorrichtung 1 ist in der ersten Versorgungsleitung 61 zwischen dem ersten Vorratsbehälter 41 und dem ersten Zwischenspeicher 51 eine Förderpumpe vorgesehen, um das erste Schmiermittel aus dem ersten Vorratsbehälter 41 in den ersten Zwischenspeicher 51 zu fördern. Ferner ist in der zweiten Versorgungsleitung 62 zwischen dem zweiten Vorratsbehälter 42 und dem zweiten Zwischenspeicher 52 eine Förderpumpe vorgesehen, um das zweite Schmiermittel aus dem zweiten Vorratsbehälter 42 in den zweiten Zwischenspeicher 52 zu fördern.

Diese Ausgestaltung mit den Förderpumpen ist insbesondere dann vorteilhaft, wenn die beiden Schmiermittel in den Zwischenspeichern 51, 52 unter einem Druck vorgehalten werden sollen, der nur mithilfe des hydrostatischen Drucks in den Vorratsbehältern nicht generierbar ist.

## Patentansprüche

1. Schmiervorrichtung für einen Grossdieselmotor, der mindestens einen Zylinder (2) aufweist, in welchem ein Kolben (3) entlang einer Lauffläche (21) hin- und herbewegbar angeordnet ist, mit einem ersten Vorratsbehälter (41) für ein erstes Schmiermittel zur Schmierung des Zylinders (2), mit einem zweiten Vorratsbehälter (42) für ein zweites Schmiermittel zur Schmierung des Zylinders (2), mit einer Schmiermittelzuführung (9) zum Einbringen des ersten oder des zweiten Schmiermittels in den Zylinder (2), mit einer Schmiermittelpumpe (8), mit welcher das erste oder das zweite Schmiermittel in die Schmiermittelzuführung (9) förderbar ist, sowie mit einem Umschaltorgan (7), mit welchem der Schmiermittelpumpe (8) wahlweise das erste oder das zweite Schmiermittel zuführbar ist, **dadurch gekennzeichnet, dass** zwischen dem Umschaltorgan (7) und den Vorratsbehältern (41, 42) ein erster Zwischenspeicher (51) und ein zweiter Zwischenspeicher (52) vorgesehen ist, wobei der erste Zwischenspeicher (51) über eine erste Versorgungsleitung (61) mit dem ersten Vorratsbehälter (41) verbunden ist, sowie über eine erste Zuführleitung (71) mit dem Umschaltorgan (7), und wobei der zweite Zwischenspeicher (52) über eine zweite Versorgungsleitung (62) mit dem zweiten Vorratsbehälter (42) verbunden ist, sowie über eine zweite Zuführleitung (72) mit dem Umschaltorgan (7).

2. Schmiervorrichtung nach Anspruch 1, wobei das Umschaltorgan (7) in die Schmiermittelpumpe (8) integriert ist.

3. Schmiervorrichtung nach einem der vorangehenden Ansprüche, mit einer Mehrzahl von Schmiermittelpumpen (8), sowie mit einer Mehrzahl von Schmiermittelzuführungen (9), wobei jede Schmiermittelpumpe (8) jeweils mit dem ersten Zwischenspeicher (51) und mit dem zweiten Zwischenspeicher (52) verbindbar ist, und wobei jede Schmiermittelpumpe (8) mit genau einer Schmiermittelzuführung (9) verbunden ist.

4. Schmiervorrichtung nach einem der vorangehenden Ansprüche, wobei jede Schmiermittelzuführung (9) eine Mehrzahl von Öffnungen (91) aufweist, durch welche das jeweilige Schmiermittel an verschiedene Stellen des Zylinders (2) einbringbar ist.

5. Schmiervorrichtung nach einem der vorangehenden Ansprüche, wobei jede Schmiermittelpumpe (8) als volumetrische Pumpe, insbesondere als Dosierpumpe ausgestaltet ist.

6. Schmiervorrichtung nach einem der vorangehenden Ansprüche, wobei in der ersten Versorgungsleitung (61) und in der zweiten Versorgungsleitung (62) jeweils eine Förderpumpe vorgesehen ist, um das jeweilige Schmiermittel aus dem ersten bzw. aus dem zweiten Vorratsbehälter (41, 42) in den ersten bzw. in den zweiten Zwischenspeicher (51, 52) zu fördern.

7. Schmiervorrichtung nach einem der vorangehenden Ansprüche, wobei der erste und der zweite Zwischenspeicher (51, 52) jeweils als rohrförmiger, im Wesentlichen zylindrischer Speicher ausgestaltet sind.

8. Schmiervorrichtung nach Anspruch 7, wobei der Innendurchmesser des ersten Zwischenspeichers (51) und der Innendurchmesser des zweiten Zwischenspeichers (52) mindestens das 1,5-fache, vorzugsweise mindestens das Doppelte beträgt wie der Innendurchmesser der ersten bzw. der zweiten Versorgungsleitung (61, 62), die mit dem jeweiligen Zwischenspeicher (51, 52) verbunden ist.

9. Verfahren zur Zylinderschmierung eines Grossdieselmotors, der mindestens einen Zylinder (2) aufweist, in welchem ein Kolben (3) entlang einer Lauffläche (21) hin- und herbewegbar angeordnet ist, bei welchem Verfahren mittels einer Schmiermittelzuführung (9) wahlweise ein erstes Schmiermittel aus einem ersten Vorratsbehälter (41), oder ein zweites Schmiermittel aus einem zweiten Vorratsbehälter (42) in den Zylinder (2) eingebracht wird, wobei das erste oder das zweite Schmiermittel von einer Schmiermittelpumpe (8) in die Schmiermittelzuführung (9) gefördert wird, und wobei der Schmiermittelpumpe (8) über ein Umschaltorgan (7) wahlweise das erste oder das zweite Schmiermittel zugeführt wird, **dadurch gekennzeichnet, dass** der Schmiermittelpumpe (8) das erste oder das zweite Schmiermittel jeweils aus einem ersten Zwischenspeicher (51) oder aus einem zweiten Zwischenspeicher (52) zugeführt wird, wobei der erste Zwischenspeicher (51) über eine erste Versorgungsleitung (61) mit dem ersten Vorratsbehälter (41) verbunden ist, sowie über eine erste Zuführleitung (71) mit dem Umschaltorgan (7), und wobei der zweite Zwischenspeicher (52) über eine zweite Versorgungsleitung (62) mit dem zweiten Vorratsbehälter (42) verbunden ist, sowie über eine zweite Zuführleitung (72) mit dem Umschaltorgan (7).

10. Verfahren nach Anspruch 9, wobei während eines Arbeitszyklus genau eines der beiden Schmiermittel in den Zylinder (2) eingebracht wird.

11. Verfahren nach einem der Ansprüche 9 oder 10, wobei in dem Zylinder (2) eine Mischung aus dem ersten und dem zweiten Schmiermittel generiert wird.

12. Verfahren nach Anspruch 11, wobei die Zusammensetzung der Mischung über die Anzahl der Arbeitszyklen eingestellt wird, in denen das erste Schmiermittel in den Zylinder (2) eingebracht wird, und die Anzahl der Arbeitszyklen, in denen das zweite Schmiermittel in den Zylinder (2) eingebracht wird.

13. Grossdieselmotor, welcher eine Schmiervorrichtung gemäss einem der Ansprüche 1-8 umfasst, oder welcher mit einem Verfahren gemäss einem der Ansprüche 9-12 betrieben wird.

14. Grossdieselmotor nach Anspruch 13, welcher als Dual-Fuel Motor zur Verbrennung eines gasförmigen Brennstoffs und zur Verbrennung eines flüssigen Brennstoffs ausgestaltet ist.

15. Grossdieselmotor nach einem der Ansprüche 13-14, ausgestaltet als längsgespülter Zweitakt-Grossdieselmotor.
